# EUROPEAN PATENT SPECIFICATION

(11) **EP 2 746 549 B1**
(45) Date of publication and mention of the grant of the patent: **27.09.2017**
(21) Application number: 13198794.3
(22) Date of filing: 20.12.2013
(51) Int. Cl.: F01N 3/20, F01N 3/28

(54) **CATALYTIC CONVERTER APPARATUS**
Katalysator
Appareil convertisseur catalytique

(30) Priority: 21.12.2012 GB 201223165; 02.05.2013 GB 201307963
(43) Date of publication of application: 25.06.2014
(73) Proprietor: EC Power A/S, 8382 Hinnerup (DK)
(72) Inventor: FØRSTER, Jesper, 8240 Risskov (DK)
(74) Representative: Taylor, Adam David

(56) References cited:
- EP-A1- 2 450 538
- WO-A1-2011/111776
- JP-A- 2009 293 448
- US-A1- 2006 260 867
- US-A1- 2011 302 910

## Description

The invention relates to a catalytic converter apparatus and in particular to a catalytic converter cooling arrangement. The invention may advantageously be used with an internal combustion engine within a combined heat and power (CHP) system.

At the current time a catalytic converter is almost always included in the exhaust system of an internal combustion engine. The exhaust gases from the combustion process are flowed through the catalytic converter in order to treat the gas to convert toxic gas(es) into non-toxic gas(es) before the exhaust is released into the outside air. Many modern catalytic converters are so called "three way" converters, which use oxidizing reactions to convert carbon monoxide (CO) and unburned hydrocarbons (HC) to CO₂ and water vapour and a reduction reaction to convert oxides of nitrogen (NOₓ) to produce CO₂, nitrogen (N₂), and water (H₂O). Different catalysts are used for different fuels and different engines. The catalyst for an engine using natural gas and a lambda-1 fuel mixture is a three way catalyst that converts NOₓ, CO, H₂ and CH₄ into CO₂, N₂ and H₂O. This is quite a demanding process since the conversion of CH₄ in particular can require a large catalyst, as compared to a thee way catalyst for a gasoline car engine.

In order for the catalytic conversion process to work properly it is important that the temperature of the catalyst is high. Catalysts will often require temperatures of around 600°C and typically at least above 450°C. The catalytic conversion rate is dependent on the temperature and thus, the higher the temperature, the smaller the catalyst needs to be to treat a given volume of exhaust gas. It is however also necessary to avoid overheating, which can cause damage to the catalyst in some cases.

Thus, when a CHP system is to accommodate a three way catalyst, the potentially large size required for CH₄ conversion and the high temperature of the catalyst surface needs special attention. Traditionally, a two stage strategy is used. Firstly the three way catalyst is insulated with mineral wool or the like in order to reduce the heat convection from the catalyst. Secondly the CHP system with the catalyst inside is ventilated, to remove the heat released from the catalyst. This is similar to the arrangement of catalytic converters in vehicles, where the catalytic converter is insulated in order to maintain the required temperature and to avoid overheating some heat loss to the atmosphere is permitted by air cooling, with the motion of the vehicle providing a forced flow of air across the housing of the catalyst.

However, this traditional strategy will affect the efficiency of a CHP system, since the ventilation cooling of the catalytic converter effectively results in loss of heat to the surroundings. For CHP systems the considerations relating to temperature control of a catalytic converter are significantly different to those in relation to vehicles. In a CHP system the exhaust gases may be conveyed through various heat exchangers before being released into the outside air. It is important for the overall efficiency of the system that heat from the exhaust is not lost. Instead it should be recovered. Air-cooling of the catalytic converter by ventilation is therefore not efficient for a CHP system.

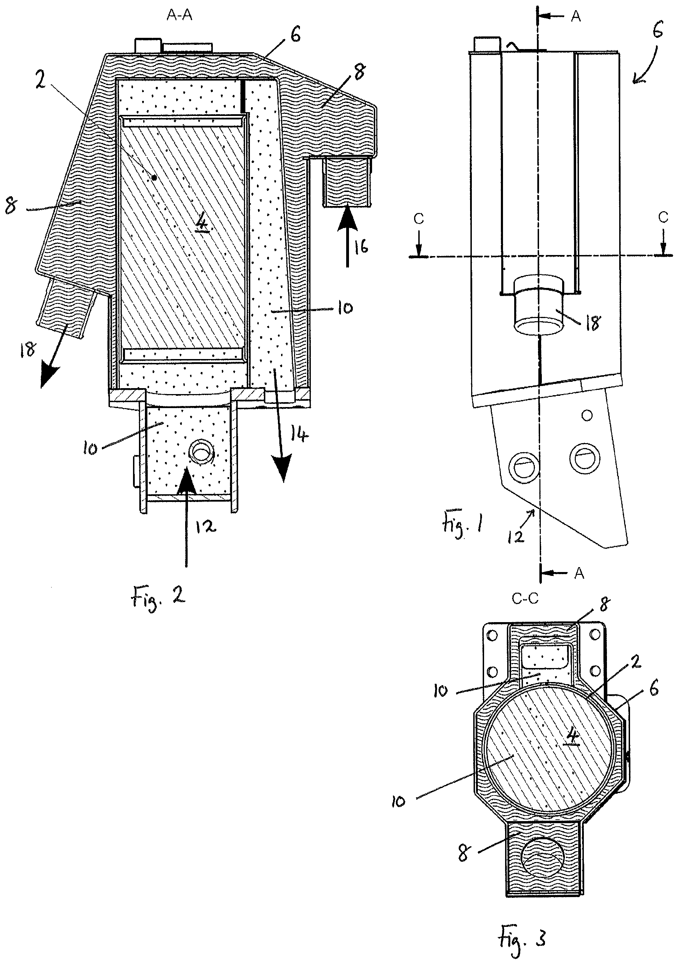

Therefore another strategy has been adopted where the motor-generator unit is placed inside an insulated cabinet, and the catalyst is encapsulated with a cooling jacket cooled by the engine coolant. CHP systems of this type are available from the applicant company, EC Power A/S of Denmark. Figures 1 to 3 show a typical design for a catalytic converter apparatus with a cooling jacket. Figure 1 shows a side view of the outside of the apparatus whereas Figures 2 and 3 show cross-sections in which the internal structure can be seen. As shown in these Figures the catalytic converter 2 enclosing the catalyst 4 is held within a cooling jacket 6 that is cooled by the engine coolant 8, which may for example be water. The exhaust gas 10 flows through the catalytic converter 2 and contacts the catalyst 4, thereby being treated to remove pollutants. The exhaust gas enters a flow path through the catalytic converter 2 via an inlet 12 and the treated exhaust gas 10 is returned via a channel to an outlet 14, after which it passes to the heat recovery system of the CHP system. The engine coolant 8 enters the cooling jacket 6 via an inlet 16 and passes around the jacket 6 about the catalytic converter 2 before exiting the jacket 6 at an outlet 18. The arrows in Figure 2 show the direction of flow of the coolant 8 and the exhaust gas 10.

As can be best seen in Figure 3 the cooling jacket 6 is located in physical contact with the outer surface of the catalytic converter 2 and about the circumference of the catalytic converter 2. The surface temperature of the cooling jacket 6 will be close to the coolant temperature. This means that no further insulation is needed and moreover that no ventilation is necessary. The catalyst can hence be placed within the housing of the CHP system with the heat of the engine being recoverable by later heat exchange with the coolant 8 and the exhaust gas 10.

However, certain problems with this arrangement have been identified. The outer surface (mantle) of the catalytic converter 2 is made from stainless steel and is welded to the inside of a cooling jacket 6 that is produced from a low grade steel. Such a weld is possible, but it is also known to be relatively brittle compared to welds between two steels of similar types. The engine coolant 8 flows in thermal contact with the outside of the catalytic converter 2, and the hot exhaust gas 10 flows through the catalyst substrate 4 on the inside of the catalytic converter 2. A temperature difference between the inner surface of the cooling jacket 6 and outer surface of the catalytic converter 2 will cause thermal tension between the two, which puts further demands on the welded joint. On the other hand, if the outer surface of the catalytic converter 2 is in good thermal contact with the inner surface of the cooling jacket 6, then the temperature of the outer surface of the catalytic converter 2 will approach the coolant temperature. This will cause the catalyst 4 to be cooled too much, which will reduce the performance of the catalyst 4.

The known arrangement, whilst providing considerable advantages compared to traditional designs, is hence susceptible to undesirable mechanical stresses when there is thermal tension and to underperformance when the heat transfer is too effective. There is consequently a need for an improved catalytic converter apparatus. Document JP 2009 293 448 A shows a catalytic converter apparatus of the type being surrounded with a cooling jacket cooled by the engine coolant. Viewed from a first aspect, the invention provides a catalytic converter apparatus comprising: a catalytic converter; a flow path for directing exhaust gas through the catalytic converter; a cavity for housing the catalytic converter; and a cooling apparatus for cooling at least a part of an inner surface of the cavity, wherein when the catalytic converter is housed within the cavity a gap is formed between the inner surface of the cavity and an outer surface of the catalytic converter with the gap extending around a major portion of the outer surface of the catalytic converter; characterised in that: the catalytic converter is supported at one end by a releasable coupling comprising bolts and extends from this end into the cavity, being thereby releasably held within the cavity; and in that the releasable coupling further comprises a seal including a flat sealing ring between two flanges, wherein the apparatus comprises an exhaust inlet and either a) the catalytic converter is integrated with the exhaust inlet, and the sealing ring is placed between a flange of the integrated catalytic converter and exhaust inlet assembly and a flange of the cooling jacket; or b) the catalytic converter is separate from the exhaust inlet, the exhaust inlet, catalytic converter and cooling apparatus are joined together with two sealing rings wherein each of the exhaust inlet, catalytic converter and cooling apparatus is provided with a flange, and the three flanges are joined together with the sealing rings between each set of flanges.

With this arrangement, the mechanical connection between the outer surface of the catalytic converter and the inner surface of the cooled cavity is broken. However, since the gap is enclosed by the inner surface of the cavity then there is no significant heat loss due to ventilation. In fact the gap can act to insulate the catalytic converter. The gap is a void for containing a gas, and hence may be termed an air gap, although of course the gas within the gas does not need to be air for it to function as described above. This means that the thermal loading between the catalytic converter and its housing is significantly decreased, whilst at the same time the catalytic converter is maintained at a high temperature. A direct mechanical connection between the cooled surface and the surface of the catalytic converter is no longer necessary and, in preferred embodiments, is completely avoided. The problematic welding of stainless steel to lower grade steel is hence no longer required. There are further advantages when the catalytic converter apparatus is used in a combined heat and power (CHP) system, which is a preferred embodiment, since no heat is lost. The heat lost from the catalytic converter will remain within the CHP system and can be recovered in heat exchangers of the CHP system, for example from the coolant of the cooling apparatus (which is preferably the engine coolant).

Preferably, the gap is not ventilated, by which is meant that it is not connected to atmosphere. This avoids any loss of heat from the catalytic converter apparatus, which is of particular benefit in the preferred use in a CHP system. The gap of the preferred embodiments is a spacing between the solid parts of the apparatus that can be filled with air or with other gases, or indeed with a vacuum or partial vacuum. In a preferred embodiment, the gap is in fluid communication with the flow path such that, in use, during flow of exhaust gas through the catalytic converter the exhaust gas also flows through the gap. The flow of exhaust gas may be a part of the total flow or, more preferably, the whole of the exhaust gas flowing through the catalyst may also flow through the gap. The flow of exhaust gas through the gap keeps the catalyst at a higher temperature and can hence improve the efficiency of the catalytic conversion process.

It is important to note here that heat transport at high temperatures (e.g. 500 °C) over an air gap without ventilation is mostly due to radiation, while the heat conduction with the air (or exhaust gas) as the cooling fluid, only accounts for a minor part of the total heat transport. However, when the hot exhaust gas is directed through the gap around the outside of the catalytic converter it is a forced flow and the exterior surface of the catalytic converter is actually heated by this flow, whilst at the same time being cooled due to the high radiation heat transport. The forced flow provides a high heat transport rate and therefore heating of the outer surface by the hot exhaust gas compensates for the radiation heat transport. The use of exhaust gas to fill the gap also means that heat lost into the gap can be recovered from the exhaust gas.

It is preferred for the flow path to direct the exhaust gas through the catalytic converter and then through the gap after treatment in the catalytic converter. This means that the gas is exposed to the catalyst at the maximum temperature, before it passes through the gap and hence without any cooling of the gas by the cooling apparatus before catalysis.

The gap extends around a major portion of a cross-section of the catalytic converter, more preferably fully around the cross-section. The cross-section may for example be a cross-section taken normal to the direction of flow of gas through the catalytic converter. It is also preferred for the gap to extend along a major portion of a length of the catalytic converter, more preferably along the whole length. The length of the catalytic converter may be its length in the direction of flow of gas along the catalytic converter.

When the gap extends fully about the length and/or cross-section of the catalytic converter then the advantageous effects of the gap are maximised. The walls of the catalytic converter are not in direct contact with the surface of the inner surface of the cavity and so all of the heat transfer is indirect, by radiation and by transfer through the flow of exhaust gas in the gap. It is preferred that there is no direct contact between the inner surface of the cavity and the outer surface of the catalytic converter along the whole length of the catalytic converter and about its entire cross-section. This may be achieved by supporting the catalytic at one or both ends thereof such that it is held in the cavity with the required gap about its periphery.

The gap may extend about sides of the catalytic converter and also about an end of the catalytic converter. When the gap is used for the flow of exhaust gas then the flow path through the catalytic converter may hence join the gap at the end of the catalytic converter. With this arrangement, in preferred embodiments where the exhaust gas first flows through the catalytic converter, gas can flow into the catalytic converter at a first end, out of the catalytic converter into a second end and into the gap and then along sides of the catalytic converter toward an outlet.

In a preferred embodiment the gap extends from one end of the catalytic converter along the sides of the catalytic converter about a major portion of the cross-section of the catalytic converter, preferably about the entire cross-section, and along a major portion of the length of the catalytic converter, preferably along the whole length thereof.

The size of the gap may vary depending somewhat on the size of the catalytic converter, on the geometry of the gap and the catalytic converter and, in preferred embodiments using the flow of exhaust gas through the gap, on the volume flow rate of exhaust gas that the gap must handle. Typically, in a cross-section taken normal to the direction of flow of gas through the catalytic converter, the cross-sectional area of the gap between the inner surface of the cavity and the outer surface of the catalytic converter may be 10-30% of the cross sectional area within the outer surface of the catalytic converter. The distance across the gap between the inner surface of the cavity and the outer surface of the catalytic converter may be 2-10% of the width of the catalytic converter, measured to its outer surface. Where the catalytic converter has a cylindrical geometry then the width is the diameter of the cylindrical outer surface. In absolute terms, the distance across the gap between the inner surface of the cavity and the outer surface of the catalytic converter may be 3 to 12 mm, preferably 4 to 9 mm. It is preferred for the cavity to be of complementary shape to the catalytic converter and for the gap to be generally the same size along the extent of the gap.

It is preferred for the cooling apparatus to cool the inner surface of the cavity at least about the extent of the gap. Thus, for example, when the gap extends around the full cross-section of the catalytic converter then the cooling apparatus should cool the inner surface of the cavity about the full cross-section thereof. The cooling apparatus may use a coolant fluid in a coolant chamber thermally coupled to the inner surface or parts thereof. In preferred embodiments the inner surface of the cavity forms a wall of the coolant chamber. It should be noted that it is not necessary for the coolant chamber to be present in immediate contact with the entire area of the inner surface that is required to be cooled. When a material with high thermal conductance is used then the material will transfer heat to the coolant over a large distance, possibly up to 50 mm in some cases. It is not therefore essential to have a coolant chamber extending all around the catalytic converter, although it is preferred for optimal cooling. The coolant chamber is preferably a cooling jacket around the cavity. The flow path for the coolant through the coolant chamber may optionally include a serpentine path, for example to improve cooling of the outer parts of the apparatus.

Whilst any coolant may be used it is preferred for the coolant to be the engine coolant. This is particularly preferred for a CHP system since the cooling of the catalytic converter apparatus is then integrated with the heat recovery systems already in place for engine cooling. The coolant may be water.

The shape of the cavity and of the catalytic converter is not important to the working of the cooling apparatus. However a cylindrical geometry is preferred for ease of manufacture and to allow conventional cylindrical catalytic converters to be used with the catalytic converter apparatus. Thus, in preferred embodiments the catalytic converter is cylindrical with the gap extending along the length of the cylinder, and the cavity is likewise cylindrical with a larger diameter than the diameter of the outer surface of the catalytic converter to provide the required gap. It will be appreciated that with a cylindrical construction it becomes easy to provide a gap of consistent size in the form of an annular gap about the entire cross-section and along the entire length of the catalytic converter.

When exhaust gas is flowed through the gap then the flow path through the gap preferably includes a serpentine path. The use of a serpentine path increases the speed of the gas flow and hence increases heat transfer between the gas and the surfaces on either side of the gap. The serpentine path may be a zig-zag path or similar, but in preferred embodiments it is a spiral path. A spiral path is straightforward to implement, especially with a cylindrical geometry for the catalytic converter and the cavity, for example by the use of a spiral ridge extending across the gap between the inner surface of the cavity and the outer surface of the catalytic converter.

The apparatus may hence include one or more flow guide element(s) such as ridges and/or grooves to guide the flow of gas along the serpentine path. The flow guide elements may be formed in or mounted on the inner surface of the cavity and/or the outer surface of the catalytic converter. Thus, one or more ridge(s) such as the spiral ridge described above, may be formed on or attached to the outer surface of the catalytic converter and/or on the inner surface of the cavity. It will be noted that in order to provide a gas-tight flow path through the serpentine path there may be some physical part extending from the outer surface of the catalytic converter to the inner surface of the cavity and hence bridging the gap, which may lead to some conductive heat transfer. However since the flow guide elements will be small any negative effect from this will be minimal and there will be no significant thermal tension or over-cooling of the catalytic converter.

The catalytic converter is supported at one end and extends from this end into the cavity. It is preferred for there to be no other support, so that the catalytic converter is held only at the one end.

The catalyst is releasably held within the cavity from the one end by a releasable coupling having one or more bolts. The use of a releasable coupling means that the catalytic converter can be easily removed from the cavity for maintenance or replacement. The catalyst will degrade over time, and therefore it is important that the catalyst can be replaced without having to replace the whole of the cooling apparatus.

The catalyst must be sealed such that there is no leak from exhaust inlet to exhaust outlet (before and after catalyst). This is very important since the level of pollutants is of the order of 20 - 100 times higher before the catalyst than after the catalyst (a typical figure is 4000 ppm CO before catalyst and 100 ppm CO after catalyst). The sealing is subjected to very high temperatures and therefore a flat sealing ring between two flanges is used. This is instead of rubber seals or similar that might otherwise be used for cylindrical parts. According to the first embodiment of the invention the catalytic converter is integrated with an exhaust inlet, such as a "trumpet connector". The advantage of this arrangement is that only a single sealing ring is required, placed between a flange of the integrated catalytic converter and exhaust inlet assembly and a flange of the cooling jacket. However, there are disadvantages in the integrated assembly since the preferred construction for the catalytic converter uses thin metal plates, preferably stainless steel, whereas the exhaust inlet will typically be of thicker material in a different grade of steel. This, in conjunction with the temperature difference between the hot catalytic converter and cooler outer surfaces of the cooling apparatus and exhaust inlet, can lead to undesirably high stresses.

Hence, according to a second embodiment of the invention the catalytic converter is to be separate from an exhaust inlet of the apparatus, and for the exhaust inlet, catalytic converter and cooling apparatus to be joined together with two sealing rings. Each of the exhaust inlet, catalytic converter and cooling apparatus is provided with a flange and the three flanges are joined together with sealing rings between each pair of flanges. Accordingly, the stack of flanges and sealing rings is releasably secured by one set of couplings, using for example one set of bolts. This means the construction may be assembled in one operation. Separation of the catalytic converter and exhaust inlet also means that a smaller part is replaced when the catalytic converter is replaced.

The invention may also extend to an engine incorporating the catalytic converter apparatus, and more preferably a combined heat and power system including the catalytic converter apparatus.

Viewed from a second aspect, the invention provides a method comprising use of the catalytic converter apparatus of the first aspect for treating the exhaust gases of an engine, preferably for treating the exhaust gases of an engine in a combined heat and power system. The second aspect may optionally include use of a catalytic converter apparatus with any of the preferred features discussed above.

Viewed from a third aspect, the invention provides a method of manufacture of a catalytic converter apparatus, the method comprising: providing a cavity in conjunction with a cooling apparatus for cooling at least a part of an inner surface of the cavity; and housing a catalytic converter within the cavity, wherein the catalytic converter is supported at one end by a releasable coupling comprising bolts and extends from this end into the cavity, being thereby releasably held within the cavity; the releasable coupling further comprises a seal including a flat sealing ring between two flanges; wherein the cavity is arranged such that when the catalytic converter is housed within the cavity a gap is formed between the inner surface of the cavity and an outer surface of the catalytic converter with the gap extending around a major portion of the outer surface of the catalytic converter, wherein the method includes providing the apparatus with a flow path for directing exhaust gas through the catalytic converter; and wherein the apparatus comprises an exhaust inlet and either: a) the catalytic converter is integrated with the exhaust inlet, and the sealing ring is placed between a flange of the integrated catalytic converter and exhaust inlet assembly and a flange of the cooling jacket; or b) the catalytic converter is separate from the exhaust inlet, the exhaust inlet, catalytic converter and cooling apparatus are joined together with two sealing rings wherein each of the exhaust inlet, catalytic converter and cooling apparatus is provided with a flange, and the three flanges are joined together with the sealing rings between each set of flanges.

The method of the invention may include providing the catalytic converter apparatus or parts thereof with any or all of the features described above in connection with the first aspect of the invention. For example in a preferred embodiment the method comprises providing the apparatus with a flow path for directing exhaust gas through the catalytic converter; and forming the gap in communication with the flow path such that, in use, during flow of exhaust gas through the catalytic converter the exhaust gas also flows through the gap. The method may comprise providing flow guide elements such as ridges and/or grooves in order to guide the flow of gas via a serpentine path through the gap. The method may hence include providing one or more ridges on the outer surface of the catalytic converter and/or on the inner surface of the cavity. The ridges may be formed on or attached to the surface. The method includes releasably securing the catalytic converter within the cavity using a coupling at one end of the catalytic converter, with the catalytic converter extending from this end into the cavity. The apparatus includes an exhaust inlet, with the catalytic converter being separate from the exhaust inlet, and the method includes joining of the exhaust inlet, catalytic converter and cooling apparatus together with two sealing rings between each pair of parts. Each of the exhaust inlet, catalytic converter and cooling apparatus is provided with a flange and the method includes joining the three flanges together with the sealing rings between each pair of flanges. Accordingly, the stack of flanges and sealing rings is releasably secured by one set of couplings, using for example one set of bolts.

Certain preferred embodiments of the invention will now be described by way of example only and with reference to the accompanying drawings, in which:
Figure 1 shows a prior art catalytic converter apparatus in a side view;
Figure 2 is a cross-section of the catalytic converter apparatus of Figure 1 along the line A-A;
Figure 3 is a cross-section of the catalytic converter apparatus of Figure 1 along the line C-C;
Figure 4 shows a perspective view of a catalytic converter apparatus of a first preferred embodiment;
Figure 5 shows the apparatus of Figure 4 in an exploded view;
Figures 6 and 7 show the apparatus of Figure 4 in two elevations;
Figures 8, 9 and 10 show cross-sections of Figure 6 or 7 along the lines A-A, B-B and C-C respectively; and
Figure 11 shows a cross-section of a catalytic converter apparatus of a second preferred embodiment.

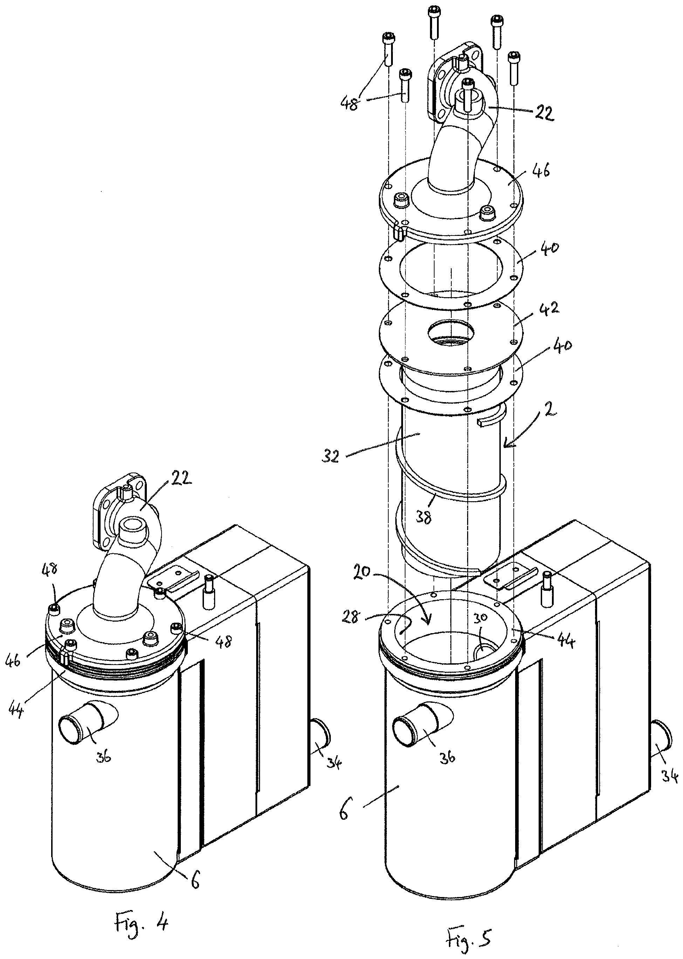

In this exemplary first embodiment the catalytic converter apparatus is described in the context of an engine of a CHP system. Referring to Figures 4 to 10 it will be see that the basic parts of the catalytic converter apparatus of the preferred embodiment are similar to the prior art. Thus, the catalytic converter 2 enclosing the catalyst substrate 4 is held within a cooling jacket 6 that is cooled by the engine coolant 8. Exhaust gas 10 from the engine of the CHP system flows through the catalytic converter 2 and contacts the catalyst 4, thereby being treated to remove pollutants. However, the arrangement of the flow paths and the geometry of the cavity 20 that houses the catalytic converter 2 is considerably different in the apparatus of Figures 4 to 10 compared to the apparatus of Figures 1 to 3. The cavity 20 is shown in the exploded diagram of Figure 5.

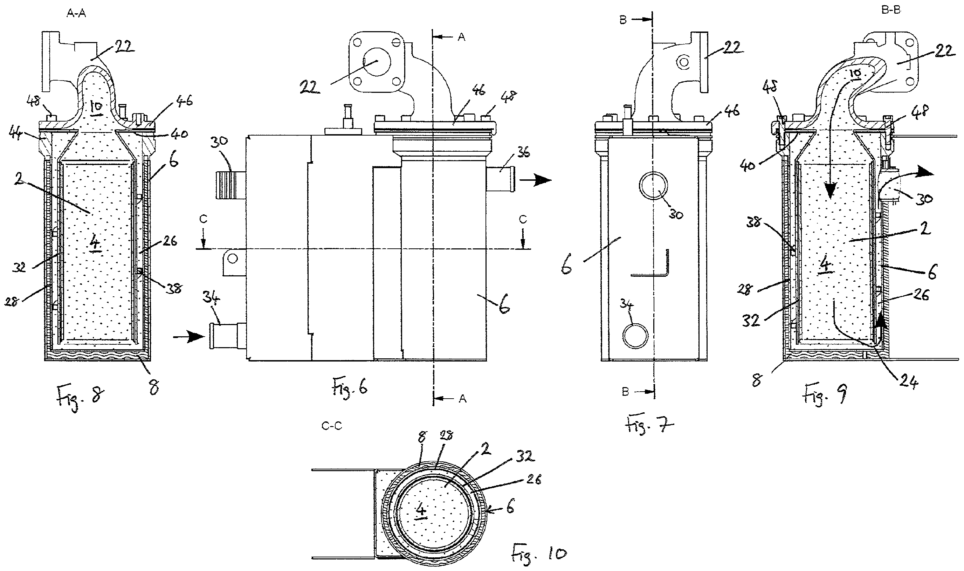

In the preferred embodiment the exhaust gas enters a flow path through the catalytic converter 2 via an inlet 22 at a first end of the catalytic converter 2 (the upper end as shown in the Figures). In the catalytic converter 2 the catalyst 4 treats the exhaust gas in a conventional manner. The treated exhaust gas exits the second end of the catalytic converter 2 and flows into a gap 26 as indicated by an arrow 24 in Figure 9. In this preferred embodiment the gap 26 is about 6 mm across. The gap 26 is a space extending around the second end of the catalytic converter 2 and up the sides of the catalytic converter 2, between an outer surface 32 of the catalytic converter 2 and an inner surface 28 of the cavity 20. The gap 26 can be considered as an outer part of the cavity 20. After flowing through the gap 26 the treated exhaust gas exits the gap 26 via an outlet passage 30 and is passed to the heat recovery system of the CHP system.

The engine coolant 8 enters the cooling jacket 6 via an inlet 34 and passes through a coolant chamber before exiting the cooling jacket 6 at an outlet 36. The arrows in Figure 6 show the direction of flow of the coolant 8. The coolant chamber includes an annular chamber formed between the inner surface 28 of the cavity 20 and an exterior surface of the cooling jacket 6. The coolant chamber also includes a chamber across the lower end of the cavity, so that the shape of the coolant chamber is an open ended cylinder, with the cavity 20 formed within it. Coolant 8 enters the coolant chamber at the lower end of the apparatus, adjacent the second end of the catalytic converter 2, circulates through the coolant chamber along the length of the cavity 20 and then exits at the upper end of the apparatus adjacent the first end of the catalytic converter 2.

As is best seen in Figure 5, the gap 26 is formed into a spiral flow path using a flow guide in the form of a spiral ridge 38. The ridge 38 can also be seen in cross-section in Figures 8 and 9. The spiral flow path increases the flow velocity of the exhaust gas through the gap 26.

The catalytic converter 2 is provided at its first end with a flange 42 that allows it to be held within the cavity 20 by coupling the flange 42 to an upper ring shaped section 44 provided on the cooling jacket 6. The inlet 22 also includes a flange section 46 of corresponding size, which allows flange 46 of the inlet 22 and the flange 42 of the catalytic converter 2 to be coupled to the upper ring shaped section 44 of the cooling jacket 6 by a single set of bolts 48. Sealing rings 40 provide a gas-tight coupling. The catalytic converter 2 can be conveniently removed from the cavity 20 for maintenance or replacement by removing the bolts 48 and detaching the inlet 22.

The catalyst chamber must be sealed such that there is no leak of exhaust gas between the exhaust inlet 22 and exhaust outlet 30. This is very important since the level of pollutants is of the order of 20 - 100 times higher before the catalytic converter 2 than after the catalytic converter 2. For example, a typical figure for carbon monoxide is 4000 ppm before the catalyst and 100 ppm after the catalyst. The sealing is subjected to very high temperatures, and therefore a flat gasket between two flanges is used, as provided by the sealing rings 40 in the second embodiment of the invention. In the first embodiment of the invention, the catalytic converter 2 and flange 42 are built as a part of the exhaust gas inlet 22 "trumpet connector" without this being a very complicated construction. This would remove the need for one of the sealing rings 40. However, since the gas inlet 22 would then support the full construction of catalytic converter 2, cooling jacket 6 and other heat exchanger parts all together, it would require the catalyst-trumpet construction to be strong enough. This leads to disadvantages, not because it is complicated to design or complicated to produce, but because of the very high temperature of the catalytic converter 2 compared to the requirement for much lower temperatures of the outer surfaces of the exhaust inlet within the CHP to limit the temperature within the cabinet. A strong construction would require thick material that would cause a high transport of heat from the catalytic converter 2 to the surrounding parts. The catalytic converter 2 is produced of thin metal plates and the combination of thick and thin materials together with temperature deviations could introduce undesirably high levels of stress.
Thus, the solution of the second embodiment of the invention, as shown in the drawings, is to separate the catalytic converter 2 and exhaust gas inlet assembly 22. The catalytic converter 2 can be produced of thinner material. The flange 42 and the catalytic converter 2 can be produced fromstainless steel with low thermal conductivity. This minimises heat transport, and stresses are also minimised since the flange 42 of the catalytic converter 2 is free to expand between the sealing rings 40.

In the second embodiment of the invention, the catalytic converter 2 is first fastened to the cooling jacket 6, with a first sealing ring 40 in between the flange 42 and the flange 44. Then the cooling jacket 6 with the catalytic converter 2 inside is fastened to the inlet 22 via the flange 46, once again with an intervening sealing ring 40. The construction is kept simple by the use of a single set of bolts to secure the three flanges 42, 44, 46 together. This can be assembled in one operation.

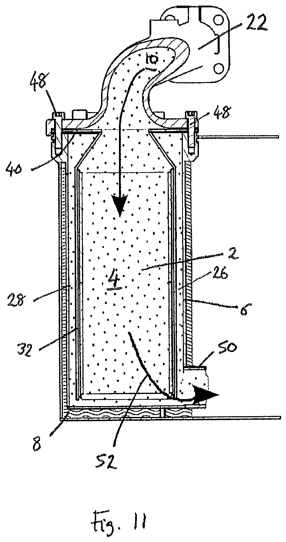

In the alternative embodiment of Figure 11 the catalytic converter apparatus has the same basic features as the first embodiment but is modified in that the exhaust gas does not flow through the gap 26. The cavity 20, cooling jacket 6 and features relating to the supporting of the catalytic converter 2 in the cavity 20 are the same and hence are not discussed further. However the outlet 30 for the exhaust gas is replaced by an outlet 50 that is at the lower end of the catalytic converter 2. As indicated by the arrow 52 the flow path for the exhaust gas 10 passes directly from this lower end of the catalytic converter out of the catalytic converter apparatus via the outlet 50 and then onward either to atmosphere or, in a CHP system, to heat exchangers for heat recovery. The gap 26 does not include the spiral ridge 38 since there is no flow path through the gap 26. Instead, the gap 26 is a simple void providing a layer of insulating gas about the catalytic converter 2.

In this embodiment the void will fill with exhaust gas since it is in contact with the flow path for the exhaust gas. However this is not essential and the gap 26 could instead be filled with air or another gas.

## Claims

1. A catalytic converter apparatus comprising:
a catalytic converter (2);
a flow path for directing exhaust gas (10) through the catalytic converter (2);
a cavity (20) for housing the catalytic converter (2); and
a cooling apparatus for cooling at least a part of an inner surface (28) of the cavity (20);
wherein when the catalytic converter (2) is housed within the cavity (20) a gap (26) is formed between the inner surface (28) of the cavity (20) and an outer surface (32) of the catalytic converter (2) with the gap (26) extending around a major portion of the outer surface (32) of the catalytic converter (2);
**characterised in that**:
the catalytic converter (2) is supported at one end by a releasable coupling comprising bolts (48) and extends from this end into the cavity (20), being thereby releasably held within the cavity (20); and
**in that** the releasable coupling further comprises a seal including a flat sealing ring (40) between two flanges (42, 44, 46);
wherein the apparatus comprises an exhaust inlet (22) and either:
a) the catalytic converter (2) is integrated with the exhaust inlet (22), and the sealing ring (40) is placed between a flange of the integrated catalytic converter and exhaust inlet assembly and a flange of the cooling jacket (44); or
b) the catalytic converter (2) is separate from the exhaust inlet (22), the exhaust inlet (22), catalytic converter (2) and cooling apparatus are joined together with two sealing rings (40) wherein each of the exhaust inlet (22), catalytic converter (2) and cooling apparatus is provided with a flange (42, 44, 46), and the three flanges are joined together with the sealing rings (40) between each set of flanges.

2. A catalytic converter apparatus as claimed in claim 1, wherein the gap (26) is in fluid communication with the flow path such that, in use, during flow of exhaust gas (10) through the catalytic converter (2) the exhaust gas (10) also flows through the gap (26).

3. A catalytic converter apparatus as claimed in claim 1 or 2, wherein the flow path directs the exhaust gas (10) through the catalytic converter (2) and then through the gap (26) after treatment of the exhaust gas (10) in the catalytic converter (2).

4. A catalytic converter apparatus as claimed in claim 1, 2 or 3, wherein the gap (26) extends around a major portion of a cross-section of the catalytic converter (2), preferably fully around the cross-section.

5. A catalytic converter apparatus as claimed in any preceding claim, wherein the gap (26) extends about sides of the catalytic converter (2) and also about an end of the catalytic converter (2).

6. A catalytic converter apparatus as claimed in any preceding claim, wherein in a cross-section taken normal to the direction of flow of gas through the catalytic converter (2), the cross-sectional area of the gap (26) between the inner surface (28) of the cavity (20) and the outer surface (32) of the catalytic converter (2) is 10-30% of the cross sectional area within the outer surface (32) of the catalytic converter (2).

7. A catalytic converter apparatus as claimed in any preceding claim, wherein the distance across the gap (26) between the inner surface (28) of the cavity (20) and the outer surface (32) of the catalytic converter (2) is 3 to 12 mm.

8. A catalytic converter apparatus as claimed in any preceding claim, wherein the exhaust gas (10) is flowed through the gap (26) and the flow path through the gap (26) includes a serpentine path, preferably a spiral path.

9. A catalytic converter apparatus as claimed in claim 8, comprising one or more ridge(s) formed on or attached to the outer surface (32) of the catalytic converter (2) and/or on the inner surface (28) of the cavity (20) for guiding the flow of gas along the serpentine path.

10. An engine or a combined heat and power device including a catalytic converter apparatus as claimed in any preceding claim.

11. Use of the catalytic converter apparatus of any of claims 1 to 9 for treating the exhaust gases (10) of an engine.

12. A method of manufacture of a catalytic converter apparatus, the method comprising:
providing a cavity (20) in conjunction with a cooling apparatus for cooling at least a part of an inner surface (28) of the cavity (20); and
housing a catalytic converter (2) within the cavity (20), wherein the catalytic converter (2) is supported at one end by a releasable coupling comprising bolts (48) and extends from this end into the cavity (20), being thereby releasably held within the cavity (20), the releasable coupling further comprises a seal including a flat sealing ring (40) between two flanges (42, 44, 46);
wherein the cavity (20) is arranged such that when the catalytic converter (2) is housed within the cavity (20) a gap (26) is formed between the inner surface (28) of the cavity (20) and an outer surface (32) of the catalytic converter (2) with the gap (26) extending around a major portion of the outer surface (32) of the catalytic converter (2);
wherein the method includes providing the apparatus with a flow path for directing exhaust gas (10) through the catalytic converter (2); and
wherein the apparatus comprises an exhaust inlet (22) and either:
a) the catalytic converter (2) is integrated with the exhaust inlet (22), and the sealing ring (40) is placed between a flange of the integrated catalytic converter and exhaust inlet assembly and a flange of the cooling jacket (44); or
b) the catalytic converter (2) is separate from the exhaust inlet (22), the exhaust inlet (22), catalytic converter (2) and cooling apparatus are joined together with two sealing rings (40) wherein each of the exhaust inlet (22), catalytic converter (2) and cooling apparatus is provided with a flange (42, 44, 46), and the three flanges are joined together with the sealing rings (40) between each set of flanges.

13. A method as claimed in claim 12 comprising providing the catalytic converter apparatus or parts thereof with any or all of the features as claimed in any of claims 1 to 9.

## Patentansprüche

1. Katalysatorvorrichtung umfassend:
einen Katalysator (2);
einen Strömungsweg zum Leiten von Abgas (10) durch den Katalysator (2);
einen Hohlraum (20) zum Aufnehmen des Katalysators (2); und
eine Kühlvorrichtung zum Kühlen von mindestens einem Teil einer Innenfläche (28) des Hohlraums (20);
wobei sobald der Katalysator (2) in den Hohlraum (20) aufgenommen ist, ein Zwischenraum (26) zwischen der Innenfläche (28) des Hohlraums (20) und einer Außenfläche (32) des Katalysators (2) gebildet wird, wobei sich der Zwischenraum (26) um einen Hauptteil der Außenfläche (32) des Katalysators (2) erstreckt;
**dadurch gekennzeichnet, dass**:
der Katalysator (2) an einem Ende durch eine lösbare Kopplung getragen wird, die Bolzen (48) umfasst und sich von diesem Ende in den Hohlraum (20) erstreckt, wobei er lösbar innerhalb des Hohlraums (20) gehalten wird; und
dass die lösbare Kopplung ferner eine Dichtung umfasst, die einen Flachdichtring (40) zwischen zwei Flanschen (42, 44, 46) umfasst;
wobei die Vorrichtung einen Abgaseinlass (22) und entweder:
a) der Katalysator (2) mit dem Abgaseinlass (22) integriert ist, und der Flachdichtring (40) zwischen einem Flansch des integrierten Katalysators und der Abgaseinlassanordnung und einem Flansch des Kühlmantels (44) angeordnet ist; oder
b) der Katalysator (2) getrennt vom Abgaseinlass (22) angeordnet ist, wobei der Abgaseinlass (22), Katalysator (2) und die Kühlvorrichtung mit zwei Dichtringen (40) zusammengefügt sind, wobei jeder Abgaseinlass (22), Katalysator (2) und jede Kühlvorrichtung mit einem Flansch (42, 44, 46) bereitgestellt ist, und die drei Flansche mit den Dichtringen (40) zwischen jedem Satz von Flanschen zusammengefügt sind.

2. Katalysator nach Anspruch 1, wobei der Zwischenraum (26) in Strömungsverbindung mit dem Strömungsweg steht, so dass im Einsatz während der Strömung eines Abgases (10) durch den Katalysator (2), das Abgas (10) auch durch den Zwischenraum (26) strömt.

3. Katalysatorvorrichtung nach Anspruch 1 oder 2, wobei der Strömungsweg das Abgas (10) durch den Katalysator (2) und anschließend durch den Zwischenraum (26) leitet, nachdem das Abgas (10) im Katalysator (2) behandelt wurde.

4. Katalysatorvorrichtung nach Anspruch 1, 2 oder 3, wobei sich der Zwischenraum (26) um einen Hauptteil eines Querschnitts des Katalysators (2), vorzugsweise vollständig um den Querschnitt, erstreckt.

5. Katalysatorvorrichtung nach einem der vorhergehenden Ansprüche, wobei sich der Zwischenraum (26) um Seiten des Katalysators (2) und auch um ein Ende des Katalysators (2) erstreckt.

6. Katalysatorvorrichtung nach einem der vorhergehenden Ansprüche, wobei in einem Querschnitt, der normal zur Strömungsrichtung von Gas durch den Katalysator (2) genommen ist, der Querschnittsbereich des Zwischenraums (26) zwischen der Innenfläche (28) des Hohlraums (20) und der Außenfläche (32) des Katalysators (2) 10 bis 30 % des Querschnittsbereiches innerhalb der Außenfläche (32) des Katalysators (2) ausmacht.

7. Katalysatorvorrichtung nach einem der vorhergehenden Ansprüche, wobei die Distanz durch den Zwischenraum (26) zwischen der Innenfläche (28) des Hohlraums (20) und der Außenfläche (32) des Katalysators (2) 3 bis 12 mm beträgt.

8. Katalysatorvorrichtung nach einem der vorhergehenden Ansprüche, wobei das Abgas (10) durch den Zwischenraum (26) strömt und der Strömungsweg durch den Zwischenraum (26) einen Serpentinenweg, vorzugsweise einen spiralförmigen Weg, umfasst.

9. Katalysatorvorrichtung nach Anspruch 8, der eine oder mehrere Kante(n) umfasst, die auf der Außenfläche (32) des Katalysators (2) und/oder auf der Innenfläche (28) des Hohlraums (20) gebildet sind oder auf dieser angebracht sind, um die Strömung des Gases den Serpentinenweg entlang zu führen.

10. Motor oder Kraft-Wärme-Vorrichtung, die eine Katalysatorvorrichtung nach einem der vorhergehenden Ansprüche umfasst.

11. Verwendung der Katalysatorvorrichtung nach einem der Ansprüche 1 bis 9 zum Behandeln der Abgase (10) eines Motors.

12. Herstellungsverfahren einer Katalysatorvorrichtung, das Verfahren umfassend:
Bereitstellen eines Hohlraums (20) in Verbindung mit einer Kühlvorrichtung zum Kühlen von mindestens einem Teil einer Innenfläche (28) des Hohlraums (20); und aufnehmen eines Katalysators (2) innerhalb des Hohlraums (20), wobei der Katalysator (2) an einem Ende durch eine lösbare Kopplung, die Bolzen (48) umfasst, gehalten wird und sich von diesem Ende in den Hohlraum (20) erstreckt, wobei er lösbar innerhalb des Hohlraums (20) gehalten wird, wobei die lösbare Kopplung ferner eine Dichtung umfasst, die einen Flachdichtring (40) zwischen zwei Flanschen (42, 44, 46) umfasst;
wobei der Hohlraum (20) derartig angeordnet ist, dass sobald der Katalysator (2) in den Hohlraum (20) aufgenommen ist, ein Zwischenraum (26) zwischen der Innenfläche (28) des Hohlraums (20) und einer Außenfläche (32) des Katalysators (2) gebildet wird, wobei sich der Zwischenraum (26) um einen Hauptteil der Außenfläche (32) des Katalysators (2) erstreckt;
wobei das Verfahren das Bereitstellen der Vorrichtung mit einem Strömungsweg zum Leiten von Abgas (10) durch den Katalysator (2) umfasst; und
wobei die Vorrichtung einen Abgaseinlass (22) und entweder:
a) der Katalysator (2) mit dem Abgaseinlass (22) integriert ist, und der Flachdichtring (40) zwischen einem Flansch des integrierten Katalysators und der Abgaseinlassanordnung und einem Flansch des Kühlmantels (44) angeordnet ist; oder
b) der Katalysator (2) getrennt vom Abgaseinlass (22) angeordnet ist, wobei der Abgaseinlass (22), Katalysator (2) und die Kühlvorrichtung mit zwei Dichtringen (40) zusammengefügt sind, wobei jeder Abgaseinlass (22), Katalysator (2) und jede Kühlvorrichtung mit einem Flansch (42, 44, 46) bereitgestellt ist, und die drei Flansche mit den Dichtringen (40) zwischen jedem Satz von Flanschen zusammengefügt sind.

13. Verfahren nach Anspruch 12, das das Bereitstellen der Katalysatorvorrichtung oder Teilen davon mit einem oder allen der Merkmale nach einem der Ansprüche 1 bis 9 umfasst.

## Revendications

1. Appareil convertisseur catalytique comprenant :
un convertisseur catalytique (2) ;
un trajet d'écoulement pour diriger des gaz d'échappement (10) à travers le convertisseur catalytique (2) ;
une cavité (20) pour loger le convertisseur catalytique (2) ; et
un appareil de refroidissement pour refroidir au moins une partie d'une surface intérieure (28) de la cavité (20) ;
dans lequel, lorsque le convertisseur catalytique (2) est logé dans la cavité (20), un espace (26) est formé entre la surface intérieure (28) de la cavité (20) et une surface extérieure (32) du convertisseur catalytique (2), l'espace (26) s'étendant autour d'une partie principale de la surface extérieure (32) du convertisseur catalytique (2) ;
**caractérisé en ce que** :
le convertisseur catalytique (2) est supporté sur une extrémité par un accouplement amovible comprenant des boulons (48) et s'étend depuis cette extrémité dans la cavité (20), en étant ainsi maintenu de manière amovible dans la cavité (20) ; et
**en ce que** le couplage amovible comprend en outre un joint d'étanchéité incluant une bague d'étanchéité plate (40) entre deux brides (42, 44, 46) ;
dans lequel l'appareil comprend une entrée d'échappement (22) et :
a) le convertisseur catalytique (2) est intégré à l'entrée d'échappement (22), et la bague d'étanchéité (40) est placée entre une bride du convertisseur catalytique intégré et un ensemble d'entrée d'échappement et une bride de l'enveloppe de refroidissement (44) ; ou
b) le convertisseur catalytique (2) est séparé de l'entrée d'échappement (22), l'entrée d'échappement (22), le convertisseur catalytique (2) et l'appareil de refroidissement sont assemblés ensemble à l'aide de deux bagues d'étanchéité (40), chacun parmi l'entrée d'échappement (22), le convertisseur catalytique (2) et l'appareil de refroidissement étant muni d'une bride (42, 44, 46), et les trois brides étant assemblées ensemble à l'aide des bagues d'étanchéité (40) entre chaque ensemble de brides.

2. Appareil convertisseur catalytique selon la revendication 1, dans lequel l'espace (26) est en communication fluidique avec le trajet d'écoulement de telle sorte que, en utilisation, pendant l'écoulement des gaz d'échappement (10) à travers le convertisseur catalytique (2), les gaz d'échappement (10) s'écoulent également à travers l'espace (26).

3. Appareil convertisseur catalytique selon la revendication 1 ou 2, dans lequel le trajet d'écoulement dirige les gaz d'échappement (10) à travers le convertisseur catalytique (2), puis à travers l'espace (26) après traitement des gaz d'échappement (10) dans le convertisseur catalytique (2).

4. Appareil convertisseur catalytique selon la revendication 1, 2 ou 3, dans lequel l'espace (26) s'étend autour d'une partie principale d'une coupe transversale du convertisseur catalytique (2), de préférence entièrement autour de la coupe transversale.

5. Appareil convertisseur catalytique selon l'une quelconque des revendications précédentes, dans lequel l'espace (26) s'étend autour des côtés du convertisseur catalytique (2) et également autour d'une extrémité du convertisseur catalytique (2).

6. Appareil convertisseur catalytique selon l'une quelconque des revendications précédentes, dans lequel, dans une coupe transversale perpendiculaire à la direction d'écoulement de gaz à travers le convertisseur catalytique (2), la surface en coupe transversale de l'espace (26) entre la surface intérieure (28) de la cavité (20) et la surface extérieure (32) du convertisseur catalytique (2) est comprise entre 10 et 30 % de la surface en coupe transversale à l'intérieur de la surface extérieure (32) du convertisseur catalytique (2).

7. Appareil convertisseur catalytique selon l'une quelconque des revendications précédentes, dans lequel la distance à travers l'espace (26) entre la surface intérieure (28) de la cavité (20) et la surface extérieure (32) du convertisseur catalytique (2) est de 3 à 12 mm.

8. Appareil convertisseur catalytique selon l'une quelconque des revendications précédentes, dans lequel les gaz d'échappement (10) s'écoulent à travers l'espace (26) et le trajet d'écoulement à travers l'espace (26) comprend un trajet en serpentin, de préférence un trajet en spirale.

9. Appareil convertisseur catalytique selon la revendication 8, comprenant une ou plusieurs arêtes formées sur la surface extérieure (32) du convertisseur catalytique (2) ou fixées à celle-ci et/ou sur la surface intérieure (28) de la cavité (20) pour guider l'écoulement de gaz le long du trajet en serpentin.

10. Moteur ou dispositif de production combinée de chaleur et d'énergie comprenant un appareil convertisseur catalytique selon l'une quelconque des revendications précédentes.

11. Utilisation de l'appareil convertisseur catalytique selon l'une quelconque des revendications 1 à 9 pour traiter les gaz d'échappement (10) d'un moteur.

12. Procédé de fabrication d'un appareil convertisseur catalytique, le procédé comprenant :
agencer une cavité (20) en association avec un appareil de refroidissement pour refroidir au moins une partie d'une surface intérieure (28) de la cavité (20) ; et
loger un convertisseur catalytique (2) à l'intérieur de la cavité (20), le convertisseur catalytique (2) étant supporté sur une extrémité par un couplage amovible comprenant des boulons (48) et s'étendant depuis cette extrémité dans la cavité (20), en étant ainsi maintenu de manière amovible à l'intérieur de la cavité (20), le couplage amovible comprenant en outre un joint d'étanchéité incluant une bague d'étanchéité plate (40) entre deux brides (42, 44, 46) ;
dans lequel la cavité (20) est agencée de sorte que, lorsque le convertisseur catalytique (2) est logé dans la cavité (20), un espace (26) est formé entre la surface intérieure (28) de la cavité (20) et une surface extérieure (32) du convertisseur catalytique (2), l'espace (26) s'étendant autour d'une partie principale de la surface extérieure (32) du convertisseur catalytique (2) ;
dans lequel le procédé comprend de doter l'appareil d'un trajet d'écoulement pour diriger les gaz d'échappement (10) à travers le convertisseur catalytique (2) ; et
dans lequel l'appareil comprend une entrée d'échappement (22) et :
a) le convertisseur catalytique (2) est intégré à l'entrée d'échappement (22), et la bague d'étanchéité (40) est placée entre une bride du convertisseur catalytique intégré et un ensemble d'entrée d'échappement et une bride de l'enveloppe de refroidissement (44) ; ou
b) le convertisseur catalytique (2) est séparé de l'entrée d'échappement (22), l'entrée d'échappement (22), le convertisseur catalytique (2) et l'appareil de refroidissement sont assemblés ensemble à l'aide de deux bagues d'étanchéité (40), chacun parmi l'entrée d'échappement (22), le convertisseur catalytique (2) et l'appareil de refroidissement étant muni d'une bride (42, 44, 46) et les trois brides étant assemblées ensemble à l'aide des bagues d'étanchéité (40) entre chaque ensemble de brides.

13. Procédé selon la revendication 12, consistant à fournir à l'appareil convertisseur catalytique ou à des parties de celui-ci l'une quelconque ou toutes les caractéristiques selon l'une quelconque des revendications 1 à 9.
